**Europäisches Patentamt**

**European Patent Office**

**Office européen des brevets**

(19)

(11) Veröffentlichungsnummer: **0 124 145**
**B1**

(12) EUROPÄISCHE PATENTSCHRIFT

(45) Veröffentlichungstag der Patentschrift:
**01.06.88**

(51) Int. Cl.⁴: **G 01 L 9/00, G 01 D 5/26**

(21) Anmeldenummer: **84200293.3**

(22) Anmeldetag: **01.03.84**

(54) **Faser-optischer Drucksensor.**

(30) Priorität: **07.03.83 DE 3307964**

(43) Veröffentlichungstag der Anmeldung:
**07.11.84 Patentblatt 84/45**

(45) Bekanntmachung des Hinweises auf die Patenterteilung:
**01.06.88 Patentblatt 88/22**

(84) Benannte Vertragsstaaten:
**DE FR GB**

(56) Entgegenhaltungen:
**DE - A - 2 849 186**
**DE - A - 2 905 630**
**FR - A - 2 410 255**
**FR - A - 2 417 753**
**US - A - 4 071 753**

(73) Patentinhaber: **Philips Patentverwaltung GmbH,
Wendenstrasse 35 Postfach 10 51 49,
D-2000 Hamburg 1 (DE)**

(84) Benannte Vertragsstaaten: **DE**

(73) Patentinhaber: **N.V. Philips' Gloeilampenfabrieken,
Groenewoudseweg 1, NL-5621 BA Eindhoven (NL)**

(84) Benannte Vertragsstaaten: **FR GB**

(72) Erfinder: **Martens, Gerhard, Dr., Hellhörn 1a,
D-2086 Ellerau (DE)**
Erfinder: **Liehr, Manfred, Stehlowweg 38,
D-2000 Hamburg 52 (DE)**

(74) Vertreter: **Auer, Horst, Dipl.-Ing. et al, Philips
Patentverwaltung GmbH
Wendenstrasse 35 Postfach 10 51 49,
D-2000 Hamburg 1 (DE)**

ACTORUM AG

## Beschreibung

Die Erfindung bezieht sich auf einen Drucksensor, mit dessen Membrane ein optisches System gekoppelt ist, das von einem Sendelichtleiter abgestrahltes Licht in Abhängigkeit der Membranauslenkung in zwei Empfangslichtleiter einkoppelt.

Aus der DE-OS 2 849 186 ist ein optisches Messgerät mit einem Drucksensor bekannt, der eine vor den Stirnflächen zweier Empfangslichtleiter angeordnete Blende aufweist. Bei einer Druckänderung verändert sich die Stellung der Blende gegenüber den Stirnflächen der Empfangslichtleiter, und von einem Sendelichtleiter abgestrahltes Licht wird in Abhängigkeit des erfassten Druckes auf die beiden Empfangslichtleiter verteilt. Durch die Blende wird jedoch nur ein Bruchteil des abgestrahlten Lichtes in die Empfangslichtleiter eingekoppelt. Die bekannte Schaltung erfordert deshalb eine empfindliche Auswerteschaltung.

Aufgabe der vorliegenden Erfindung ist es, einen Drucksensor zu schaffen, der das Licht vollständig in die Empfangslichtleiter einkoppelt, so dass der über die Lichtstärke erfasste Druck über unempfindlichere Fotoelemente und eine einfache Schaltung auswertbar ist.

Diese Aufgabe wird erfindungsgemäss dadurch gelöst, dass der Sende- und die Empfangslichtleiter parallel zur Membrane angeordnet sind, und dass das optische System als fokussierendes System ausgebildet ist.

Eine Ausgestaltung der Erfindung ergibt sich dadurch, dass das fokussierende System ein Linsensystem ist, das mindestens eine senkrecht zur Membrane von dieser bewegbare Linse enthält. Hiermit ist der Vorteil verbunden, dass der Logarithmus des Quotienten der Intensitäten in den Empfangslichtleitern linear mit der Auslenkung der Membrane verläuft und unabhängig von der Stärke des abgestrahlten Lichtes des Sendelichtleiters ist. In einer weiteren vorteilhaften Ausgestaltung der Erfindung ist das fokussierende System ein Hohlspiegel.

Ist die bewegbare Linse eine Kugellinse, lassen sich die Abmessungen des Drucksensors sehr verkleinern, das Kugellinsen mit sehr geringen Durchmessern herstellbar sind.

Eine vorteilhafte Ausgestaltung der Erfindung ergibt sich dadurch, dass zwischen der Kugellinse und den Empfangslichtleitern eine Zylinderlinse angeordnet ist, deren Achse in Bewegungsrichtung der Kugellinse liegt. Die Zylinderlinse verformt den Lichtstrahl derart, dass der auf die Empfangslichtleiter projizierte Lichtpunkt die Form einer Ellipse annimmt. Durch die Verringerung des Durchmessers des Lichtfleckes senkrecht zur Achse der Zylinderlinse wird die Intensität des in die Empfangslichtleiter eingekoppelten Lichtes vergrössert. Die Empfindlichkeit und die Linearität des Sensors wird dadurch nicht verändert.

In einer weiteren vorteilhaften Weiterbildung der Erfindung ist das fokussierende System mit zwei einander gegenüberliegenden und eine Druckmessdose abschliessenden Messmembranen mechanisch verbunden. Ein als Druckmessdose mit zwei gekoppelten Messmembranen ausgebildeter Drucksensor erlaubt die Messung der Differenz der auf beide Messmembranen wirkenden Drücke.

Um eine Zerstörung der Messmembranen bei einem zu grossen auf die Messmembranen wirkenden Druck zu verhindern, ist es zweckmässig, die Druckmessdose mit einer inkompressiblen und für die verwendete Lichtwellenlänge transparenten Flüssigkeit zu füllen.

Wird die Druckmessdose von einer das fokussierende System halternden Trennmembrane in zwei jeweils von einer Messmembrane abgeschlossene Räume geteilt, sind die Messmembranen und das Linsensystem hydraulisch gekoppelt, so dass eine mechanische Verbindung zwischen den Messmembranen und dem Linsensystem nicht erforderlich ist.

Eine vorteilhafte Ausgestaltung der Erfindung ergibt sich dadurch, dass in der Druckmessdose ein biegeelastisches, mit den Messmembranen mechanisch verbundenes Rohr flüssigkeitsdicht angeordnet ist, an dessen Innenwandung das fokussierende System befestigt ist. Die Lichtleiter mit ihren freien Enden münden im Rohr und sind gegen das Rohr mechanisch entkoppelt. Dadurch wird vermieden, dass die Genauigkeit und die Empfindlichkeit eines flüssigkeitsgefüllten Drucksensors durch eine Veränderung des Brechungsindex beeinflusst wird. Damit bleibt die Güte der optischen Abbildung erhalten.

Die mit der Erfindung verknüpften Vorteile bestehen darin, dass bei kleinen Membranauslenkungen grosse Intensitätsunterschiede des eingekoppelten Lichtes in den Empfangslichtleitern hervorgerufen werden. Der über die Lichtintensität in den Empfangslichtleitern erfasste Druck ist mit einer einfachen Schaltung der Fotoelemente auswertbar und ist durch eine nahezu lineare Kennlinie darstellbar, die, was einem weiteren Vorteil entspricht, ausserdem unabhängig von der Stärke des abgestrahlten Lichtes des Sendelichtleiters ist.

Anhand der Zeichnungen werden einige Ausführungsbeispiele der Erfindung beschrieben und deren Wirkungsweise erläutert. Es zeigen

Fig. 1 einen Drucksensor mit einer Membrane im Schnitt,

Fig. 2 einen als Druckmessdose ausgebildeten Drucksensor im Schnitt,

Fig. 3 eine mit einer inkompressiblen Flüssigkeit gefüllte Druckmessdose mit einer Trennmembrane,

Fig. 4 eine mit Flüssigkeit gefüllte Druckmessdose und einem biegeelastischen Rohr.

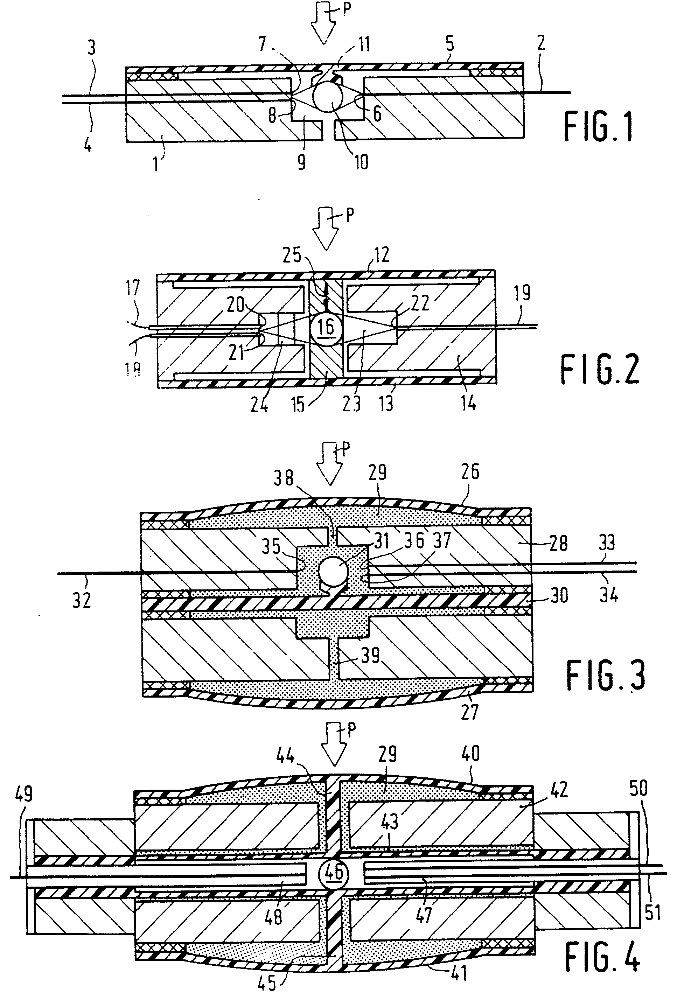

In der Fig. 1 sind in einem Grundkörper 1 ein Sendelichtleiter 2 und zwei Empfangslichtleiter 3 und 4 parallel zu einer auf den Grundkörper 1 befestigten Membrane 5 geführt. Die Stirnfläche 6 des Sendelichtleiters 2 und die Stirnflächen 7 und 8 der Empfangslichtleiter 3 und 4 liegen auf einander gegenüberliegenden Flächen eines Raumes 9. Im Zentrum des Raumes 9 befindet sich eine Kugellinse 10, die über eine Halterung 11 an der Membrane 5 befestigt ist.

Das über die Stirnfläche 6 des Sendelichtleiters 2 abgestrahlte Licht wird von der Kugellinse 10 in Ruhestellung der Membrane 5 auf die Stirnflächen 7 und 8 zu gleichen Teilen gebündelt. Wirkt ein Druck P auf die Membrane 5, so lenkt die Membrane in Richtung des Pfeiles aus, die Kugellinse 10 bewegt sich ebenfalls in Richtung des Pfeiles, und der Lichtfleck bewegt sich mehr auf die Stirnfläche 8 zu. Dadurch nimmt die Stärke des in den Empfangslichtleiter 4 eingekoppelten Lichtes zu und die Stärke des in den Empfangslichtleiter 3 eingekoppelten Lichtes ab. Bei grossen Auslenkungen der Membrane 5 in Richtung des Pfeiles P wird das vom Sendelichtleiter 2 abgestrahlte Licht nur noch in den Empfangslichtleiter 4 eingekoppelt. Der sich in den Empfangslichtleitern 3 und 4 ergebende Lichtstärkeunterschied ist druckabhängig und kann mit Hilfe einfacher Fotoelemente und einer einfachen differenzbildenden Schaltung ausgewertet werden. Die Schaltung kann auch logarithmierend sein.

In der Fig. 2 sind zwei Messmembranen 12 und 13 in einer Haltevorrichtung 14 befestigt. Über eine stempelförmige Halterung 15 ist die Mitte der Messmembranen 12 und 13 mit einer Kugellinse 16 mechanisch verbunden. Die Empfangslichtleiter 17 und 18 und der Sendelichtleiter 19 sind in der Haltevorrichtung 14 parallel zu den Messmembranen 12 und 13 geführt und münden mit ihren Stirnflächen 20, 21, 22 in einen Raum 23, in dessen Zentrum sich die Kugellinse 16 befindet. Zwischen der Kugellinse 16 und den Stirnflächen 20 und 21 der Empfangslichtleiter 17 und 18 befindet sich eine Zylinderlinse 24, deren Achse in Bewegungsrichtung 25 der Kugellinse 16 liegt.

In Ruhelage wird fast das gesamte, vom Sendelichtleiter 19 abgestrahlte Licht über die Kugellinse 16 und die Zylinderlinse 24 als gleichermassen auf den Stirnflächen 20 und 21 liegender Lichtfleck abgebildet, wie in der Fig. 2 angedeutet ist. Die Zylinderlinse 24 bewirkt, dass bei vergrössernden Abbildungen durch die Kugellinse der Lichtfleck in Richtung senkrecht zur Achse der Zylinderlinse auf nahezu Faserquerschnitt verkleinert wird, um eine bessere Ausnutzung der zur Verfügung stehenden Lichtintensität zu erreichen.

Wirkt auf die Messmembranen 12 und 13 derselbe Druck, bleibt die Kugellinse 16 in Ruhe. Wirkt auf die Messmembrane 12 ein durch den Pfeil P angedeuteter Überdruck, lenken die Messmembranen 12 und 13 über die Halterung 15 auch die Kugellinse 16 in Richtung des Pfeiles P aus. Der zwischen die Stirnflächen 20 und 21 projizierte Lichtfleck bewegt sich in Richtung der Stirnfläche 21 und die in den Empfangslichtleiter 18 eingekoppelte Lichtmenge nimmt zu, während die in den Empfangslichtleiter 17 eingekoppelte Lichtmenge abnimmt. Der Unterschied der in die Empfangslichtleiter 17 und 18 eingekoppelten Lichtmengen ist ein Mass für den auf die Messmembrane 12 einwirkenden Überdruck.

In der Fig. 3 bilden Messmembranen 26 und 27 mit einem Grundkörper 28 einen mit Öl 29 gefüllten geschlossenen Raum. Der Raum ist durch eine Trennmembran 30 zweigeteilt. An der Trennmembran 30 ist eine Kugellinse 31 befestigt. Ein Sendelichtleiter 32 und zwei Empfangslichtleiter 33 und 34 sind über den Grundkörper 28 derart in den mit Öl gefüllten Raum eingeführt, dass sich die Stirnfläche 35 des Sendelichtleiters 32 und die Stirnflächen 36 und 37 der Empfangslichtleiter 33 und 34 einander gegenüberliegen und dazwischen die Kugellinse 31 angeordnet ist.

Durch die Ölfüllung wird erreicht, dass die Messmembranen 26 und 27 gleichmässig belastet und bei hohem Druck auf beiden Seiten des Drucksensors nicht zerstört werden, und dass die Bewegungen der Messmembranen 26 und 27 auf die Trennmembran 30 übertragen wird. Weiterhin beleibt bei Volumenausdehnung des Öls durch Temperaturänderung des Sensors bei gleichen Ölvolumina zu beiden Seiten der Trennmembran 30 und gleichen Messmembranen 26 und 27 die Position der Trennmembran 30 und damit die Position der Kugellinse unverändert.

Wirkt auf beide Messmembranen 26 und 27 der gleiche Druck, bleibt die Kugel in Ruhe. Ein Überdruck in Richtung des Pfeiles P auf die Messmembrane 26 bewirkt, dass der Druck des Öles unter der Messmembrane 26 zunimmt. Über einen Kanal 38 drückt Öl auf die Trennmembran 30, die mit der Kugellinse 31 in Pfeilrichtung auslenkt. Das von dem Sendelichtleiter 32 und durch die Kugellinse 31 in den Empfangslichtleiter 34 eingekoppelte Licht nimmt zu und das in den Empfangslichtleiter 33 eingekoppelte Licht nimmt ab. Der Unterschied der in die Empfangslichtleiter 33 und 34 eingekoppelten Lichtmengen ist ein Mass für die Grösse des auf die Messmembrane 26 wirkenden Überdruckes. Durch die Auslenkung der Trennmembran 30 wird ebenfalls Öl über einen Kanal 39 in den über der Messmembrane 27 liegenden Raum gepresst, und die Messmembrane 27 lenkt in Pfeilrichtung aus.

In der Fig. 4 bilden Messmembranen 40 ud 41 mit einem Grundkörper 42 eine mit Öl gefüllte Druckmessdose, in der ein biegeelastisches Rohr 43 parallel zu den Messmembranen 40 und 41 flüssigkeitsdicht angeordnet ist. Über mechanische Verbindungen 44 und 45 ist das Rohr 43 mit den Messmembranen 40 und 41 gekoppelt. An der Innenwandung des Rohres 43 befindet sich eine Kugellinse 46. Über Zuführungen 47 und 48 sind ein Sendelichtleiter 49 und zwei Empfangslichtleiter 50 und 51 in das Rohr 43 eingeführt und gegen das Rohr 43 mechanisch entkoppelt.

Ein in Richtung des Pfeiles P auf die Messmembrane 40 wirkender Überdruck lenkt die Messmembrane 40 und damit über die Verbindung 44 das Rohr 43, sowie die damit verbundene Kugellinse 46 aus. Da die Zuführungen 47 und 48 gegenüber dem Rohr 43 mechanisch entkoppelt sind, behalten die Lichtleiterstirnflächen ihre ursprüngliche Position relativ zum Grundkörper 42 bei. Die sich ergebende Relativbewegung zwischen den einander gegenüberliegenden Stirnflächen der Lichtleiter 49, 50, 51 und der Kugellinse 46 führt dazu, dass die vom Sendelichtleiter 49 abgestrahlte und durch die Kugellinse 46 in den Empfangslichtleiter 51 eingekoppelte Lichtmenge zunimmt und die in den Empfangslichtleiter 50 eingekoppelte Lichtmenge abnimmt. Der Unterschied der in die Empfangslichtleiter 50 und 51 eingekoppelten Lichtmengen ist ein Mass für den auf die Messmembrane 40 einwirkenden Überdruck.

Das fokussierende System kann auch als Hohlspiegel ausgebildet sein. Hierbei sind der Sende- und die Empfangslichtleiter auf der dem Spiegel gegenüberliegenden Seite angeordnet.

## Patentansprüche

1. Drucksensor, mit dessen Membrane ein optisches System gekoppelt ist, das von einem Sendelichtleiter abgestrahltes Licht in Abhängigkeit der Membranauslenkung in zwei Empfangslichtleiter einkoppelt, dadurch gekennzeichnet, dass der Sende- (2, 19, 32, 49) und die Empfangslichtleiter (3, 4, 17, 18, 33, 34, 50, 51) parallel zur Membrane (11, 12, 13, 26, 27, 40, 41) angeordnet sind, und dass das optische System als fokussierendes System ausgebildet ist.

2. Drucksensor nach Anspruch 1, dadurch gekennzeichnet, dass das fokussierende System ein Linsensystem ist, das mindestens eine senkrecht zur Membrane von dieser bewegbare Linse (10, 16, 31, 46) enthält.

3. Drucksensor nach Anspruch 1, dadurch gekennzeichnet, dass das fokussierende System ein Hohlspiegel ist.

4. Drucksensor nach Anspruch 2, dadurch gekennzeichnet, dass die bewegbare Linse eine Kugellinse (10, 16, 31, 46) ist.

5. Drucksensor nach Anspruch 4, dadurch gekennzeichnet, dass zwischen der Kugellinse (16) und den Empfangslichtleitern (17, 18) eine Zylinderlinse (24) angeordnet ist, deren Achse in Bewegungsrichtung (25) der Kugellinse (16) liegt.

6. Drucksensor nach einem der Ansprüche 1 bis 5, dadurch gekennzeichnet, dass das Linsensystem (16, 46) mit zwei einander gegenüberliegenden und eine Druckmessdose abschliessenden Messmembranen (12, 13, 40, 41) mechanisch verbunden ist.

7. Drucksensor nach Anspruch 6, dadurch gekennzeichnet, dass die Druckmessdose mit einer inkompressiblen und für die verwendete Lichtwellenlänge transparenten Flüssigkeit (29) gefüllt ist.

8. Drucksensor nach Anspruch 7, dadurch gekennzeichnet, dass die Druckmessdose mittels einer das fokussierende System halternden Trennmembrane (30) in zwei jeweils von einer Messmembrane (26, 27) abgeschlossene Räume geteilt ist.

9. Drucksensor nach Anspruch 7, dadurch gekennzeichnet, dass in der Druckmessdose ein biegeelastisches, mit den Messmembranen (40, 41) mechanisch verbundenes Rohr (43) flüssigkeitsdicht angeordnet ist, an dessen Innenwandung das fokussierende System (46) befestigt ist.

10. Drucksensor nach Anspruch 9, dadurch gekennzeichnet, dass die Lichtleiter (49, 50, 51) mit ihren freien Enden im Rohr (43) münden und gegen das Rohr (43) mechanisch entkoppelt sind.

## Claims

1. A pressure sensor comprising a diaphragm coupled to an optical system which couples light emitted by a tansmitting light guide into two receiving light guides depending on the excursions of the diaphragm, characterized in that the transmitting light guides (2, 19, 32, 49) and receiving light guides (3, 4, 17, 18, 33, 34, 50, 51) are arranged parallel to the diaphragm (11, 12, 13, 26, 27, 40, 41), and in that the optical system is a focusing system.

2. A pressure sensor a claimed in Claim 1, characterized in that the focusing system is a lens system which comprises at least one lens (10, 16, 31, 46) which is arranged to be movable by the diaphragm in a direction perpendicular to the diaphragm.

3. A pressure sensor as claimed in Claim 1, characterized in that the focusing system is a concave mirror.

4. A pressure sensor as claimed in Claim 2, characterized in that the movable lens is ball-lens (10, 16, 31, 46).

5. A pressure sensor as claimed in Claim 4, characterized in that a cylindrical lens (24) is arranged between the ball-lens (16) and the receiving light guides (17, 18), the axis of the cylindrical lens extending in the direction of the movement (25) of the ball-lens (16).

6. A pressure sensor as claimed in any one of the Claims 1 to 5, characterized in that the lens system (16, 46) is mechanically connected to two measuring diaphragms (12, 13, 40, 41) which are arranged opposite each other and which close a pressure cell.

7. A pressure sensor as claimed in Claim 6, characterized in that the pressure cell is filled with an incompressible fluid (29) which is transparent to the wavelengths of the light being used.

8. A pressure sensor as claimed in Claim 7, characterized in that a separating diaphragm (30) which supports the focusing system divides the pressure cell into two compartments which are each closed by one of the measuring diaphragms (26, 27).

9. A pressure sensor as claimed in Claim 7, characterized in that a flexible tube (43) which is mechanically connected to the measuring diaphragms (40, 41) is arranged in the pressure cell in a fluid-tight manner, the focusing system (46) being secured to the inner wall of said tube.

10. A pressure sensor as claimed in Claim 9, characterized in that the free ends of the light guides (49, 50, 51) terminate in the tube (43) and are mechanically isolated from the tube (43).

## Revendications

1. Capteur de pression aux membranes duquel est couplé un système optique qui,en fonction de la flexion des membranes, introduit la lumière émise par un guide de lumière émetteur dans deux guides de lumière récepteurs, caractérisé en ce que les guides de lumière émetteur (2, 19, 32, 49) et récepteurs (3, 4, 17, 18, 33, 34, 50, 51) sont disposés parallèlement à la membrane (11, 12, 13, 26, 27, 40, 41) et en ce que le système optique est réalisé sous la forme d'un système de focalisation.

2. Capteur de pression selon la revendication 1, caractérisé en ce que le système de focalisation est un système de lentilles comportant au moins une lentille (10, 16, 31, 46) pouvant être déplacée par la membrane dans le sens perpendiculaire à celle-ci.

3. Capteur de pression selon la revendication 1, caractérisé en ce que le système de focalisation est un miroir concave.

4. Capteur de pression selon la revendication 2, caractérisé en ce que la lentille mobile est une lentille-boule (10, 16, 31, 46).

5. Capteur de pression selon la revendication 4, caractérisé en ce qu'entre la lentille-boule (16) d'une part et les guides de lumière récepteurs (17, 18) d'autre part, est disposée une lentille cylindrique (24) dont l'axe est situé dans le sens de mouvement (25) de la lentille-boule (16).

6. Capteur de pression selon l'une des revendications 1 à 5, caractérisé en ce que le système de lentilles (16, 46) est lié mécaniquement à deux membranes de mesure (12, 13, 40, 41) situées en vis-à-vis et fermant une boîte dynamométrique.

7. Capteur de pression selon la revendication 6, caractérisée en ce que la boîte dynamométrique est remplie d'un liquide incompressible (29) transparent à la longueur d'onde lumineuse utilisée.

8. Capteur de pression selon la revendication 7, caractérisé en ce que la boîte dynamométrique est divisée par une membrane de séparation (30) supportant le système de focalisation en deux compartiments fermés chacun par une membrane de mesure (26, 27).

9. Capteur de pression selon la revendication 7, caractérisé en ce que, dans la boîte dynamométrique, est disposé de façon étanche aux liquides un tube flexible (43) lié mécaniquement aux membranes de mesure (40, 41) et à la paroi intérieure duquel est fixé le système de focalisation (46).

10. Capteur de pression selon la revendication 9, caractérisé en ce que les guides de lumière (49, 50, 51) débouchent par leurs extrémités libres dans le tube (43) et sont isolés mécaniquement du tube (43).

FIG.1

FIG.2

FIG.3

FIG.4